## Europäisches Patentamt
## European Patent Office
## Office européen des brevets

(19)

(11) Numéro de publication: **0 183 604**
**B1**

(12)

# FASCICULE DE BREVET EUROPÉEN

(45) Date de publication du fascicule du brevet:
**21.09.88**

(51) Int. Cl.⁴: **C 08 F 210/16, C 08 F 4/60**

(21) Numéro de dépôt: **85402215.9**

(22) Date de dépôt: **15.11.85**

(54) **Procédé amélioré de fabrication d'un copolymère éthylène-butène-1 par polymérisation de l'éthylène.**

(30) Priorité: **20.11.84 FR 8417774**

(43) Date de publication de la demande:
**04.06.86 Bulletin 86/23**

(45) Mention de la délivrance du brevet:
**21.09.88 Bulletin 88/38**

(84) Etats contractants désignés:
**AT BE CH DE FR GB IT LI LU NL SE**

(56) Documents cité:
**EP-A-0 114 416**
**US-A-3 304 292**
**US-A-3 911 042**

(73) Titulaire: **INSTITUT FRANCAIS DU PETROLE, 4, Avenue de Bois- Préau, F-92502 Rueil- Malmaison (FR)**
Titulaire: **Société Chimique des Charbonnages, Tour Aurore Place des Reflets Cédex no 5, F-92080 Paris la Défense 2 (FR)**

(72) Inventeur: **Labatut, Brigitte, 912 Neuve Voie, La Couture F-62136 Lestrem (FR)**
Inventeur: **Chauvin, Yves, 64, Avenue du Général Leclerc, F-78230 Le Pecq (FR)**
Inventeur: **Fuchs, Jean- Marc, 34, rue Roger Salengro, F-62172 Bouvigny- Boyeffles (FR)**

(74) Mandataire: **Colas des Francs, Jean, Institut Français du Pétrole 4, Avenue de Bois Préau, F-92502 Rueil- Malmaison (FR)**

LIBER, STOCKHOLM 1988

## Description

L'objet de la présente invention est un procédé amélioré de fabrication de copolymère linéaire de basse densité de l'éthylène avec le butène-1 (et le cas échéant l'hexène-1) par polymérisation de l'éthylène à haute pression.

Il est connu de copolymériser l'éthylène avec le butène-1 à l'aide de composés de métaux de transition et d'alkylaluminium pour conduire à des copolymères dont les propriétés sont intermédiaires entre celles du polyéthylène de haute densité obtenu par les mêmes catalyseurs et le polyéthylène de basse densité obtenu par voie radicalaire à haute pression et haute température.

Pour obtenir de tels copolymères on introduit en continu, dans le réacteur de polymérisation, en même temps que le catalyseur un mélange d'éthylène et de butène-1 dans un rapport tel que, compte tenu de la réactivité relative des deux oléfines, le copolymère contienne en général entre 5 et 20 % en poids de butène-1.

Le butène-1 qui est utilisé dans un tel procédé peut être obtenu par exemple par les méthodes connues de craquage des hydrocarbures saturés, suivies de fractionnement et d'extraction.

Cependant, quand on ne dispose pas des quantités voulues de butène-1 dans les coupes de craquage disponibles ou quand la pureté requise pour le butène-1 ne peut être assurée par fractionnement, il peut être plus intéressant de synthétiser le butène-1, par exemple par dimérisation catalytique de l'éthylène. On connait pour cela des catalyseurs comme par exemple celui est est décrit dans le brevet des Etats Unis d'Amérique US-A-2 943 125 qui est constitué par le mélange de tétrabutylate de titane et de triethylaluminium, celui qui est décrit dans US-A-3 911 042 et qui est constitué par un titanate d'alcoyle, par exemple Ti(OR)$_4$ où R est un radical hydrocarboné, un modificateur tel que (C$_5$H$_5$)$_2$ TiCl$_2$, un éther et un composé d'aluminium, ou encore les métaux alcalins utilisés tels quels sous forme de dispersion ou déposés sur supports comme l'alumine ou des carbonates alcalins.

Plutôt que d'opérer en deux étapes, c'est-à-dire de dimériser d'abord l'éthylène en butène-1, puis de réaliser la copolymérisation, il a été proposé de réaliser les deux réactions simultanément dans la même enceinte. Le principe en a été décrit dans le brevet des Etas Unis d'Amérique US-A-3 304 292 dans lequel un système catalytique particulier, qui peut par exemple être constitué essentiellement par un métal alcalin, un composé de l'aluminium, un halogénure de titane et un composé basique, est utilisé.

Il a par ailleurs été décrit dans le brevet US-A-4 133 944 un procédé de polymérisation de l'éthylène permettant d'obtenir un copolymère éthylène/butène-1 contenant de 4 à 10 % en poids de butène-1.

Le système catalytique utilisé comprend un catalyseur de polymérisation associé à diverses proportions d'un catalyseur de dimérisation, ledit catalyseur de dimérisation comprenant un mélange de trièthylaluminium et de tétra-n-butylate de titane.

Le catalyseur de polymérisation utilisé dans ce brevet contient du trichlorure de titane et du chlorure de diéthylaluminium selon une proportion molaire de 4 : 1 entre l'aluminium et le titane.

On opère dans les exemples à une température de 200 à 215° C sous une pression d'environ 600 bars.

La productivité maximale obtenue par rapport au trichlorure de titane est de 3400 g de polymère par millimole de TiCl$_3$.

Il a maintenant été trouvé, et ceci constitue l'objet de la présente invention, qu'il est possible d'obtenir un copolymère éthylène-butène-1 par polymérisation de l'éthylène par un procédé comportant la formation de butène-1 et, en faibles quantités, d'hexène-1 à partir d'éthylène, dans l'enceinte réactionnelle, et la copolymérisation simultanée de l'éthylène avec le butène-1 formé, ledit procédé permettant d'obtenir une productivité nettement améliorée par rapport aux techniques antérieures décrites ci-dessus.

Ce procédé de préparation d'un copolymère éthylène/butène-1 à partir d'éthylène consiste à conduire la réaction en présence d'un mélange d'un catalyseur de dimérisation et d'un catalyseur de polymérisation, ledit mélange comprenant au moins un titanate d'alkyle, au moins un halogénure d'un métal de transition choisi dans le groupe formé par le trichlorure de titane et le trichlorure de vanadium, au moins un éther et au moins un composé d'aluminium choisi dans le groupe formé par les hydrocarbylaluminiums et les hydrures de dialkylaluminium.

Dans une forme préférée de réalisation de l'invention le catalyseur de dimérisation et le catalyseur de polymérisation sont introduits séparément dans l'enceinte réactionnelle.

La pression à laquelle se déroule la réaction est en général supérieure à 40 megapascals (MPa), et inférieure à 250 MPa.

Le catalyseur de dimérisation comprend de préférence un mélange formé d'au moins un titanate d'alkyle, d'au moins un éther, et d'au moins un hydrocarbylaluminium.

L'éther utilisé pour former le catalyseur de dimérisation employé dans la présente invention peut être un monoéther ou un polyéther; on emploiera par exemple des éthers aliphatiques, aromatiques ou mixtes ou des éthers cycliques. On utilise avantageusement, par exemple, le diéthyléther, le diisopropyléther, le dibutyléther, le méthyltertiobutyléther, le dihydropyranne, l'éther diméthylique de l'éthylène-glycol, le tétrahydrofuranne ou le dioxane-1,4. Dans une forme préférée de l'invention on utilise les éthers cycliques et en particulier le dioxane-1,4 et/ou le tétrahydrofuranne.

Les titanes d'alkyle utilisables selon l'invention répondent à la formule générale Ti(OR'')$_4$ dans

laquelle R″ est un radical hydrocarbyle, par exemple un radical alkyle de 2 à 12 atomes de carbone, linéaire ou ramifié, cyclique ou acyclique, saturé ou insaturé, ou un radical aryle ou aralkyle de 6 à 18 atomes de carbone. On peut utiliser par exemple le titanate de tétraéthyle, le titanate de tétrapropyle, le titanate de tétraisopropyle, le titanate de tétra-n-butyle, le titanate de tétra-2-éthyl-hexyle, le titanate de tétraoctyle.

Les composés de l'aluminium utilisables dans la préparation du catalyseur de dimérisation sont représentés par les formules générales $AlR_3$ ou $AlR_2H$, dans lesquelles R est un radical hydrocarbyle, par exemple un radical alkyle de 2 à 12 atomes de carbone, linéaire ou ramifié, cyclique ou acyclique, saturé ou insaturé, ou un radical aryle ou aralkyle de 6 à 18 atomes de carbone; on peut utiliser par exemple le triéthylaluminium, le triisobutylaluminium, le tripropylaluminium, le trihexylaluminium, le triisohexylaluminium ou l'hydrure de diisobutylaluminium.

Le catalyseur de polymérisation est constitué par du trichlorure de titane ou du trichlorure de vanadium et d'une manière avantageuse par leur mélange. Ces derniers peuvent être obtenus par des méthodes connues telles que réduction des tétrachlorures correspondants par les réducteurs connus aluminium métallique, alkylaluminiums, hydrures d'alkylaluminium ou halogénures d'alkylaluminium, magnésiens, lithiens ; ils peuvent être éventuellement formés in-situ. Les trichlorures peuvent être mis en oeuvre tels quels ou déposés sur différents supports généralement utilisés pour cet usage, tel que par exemple alumine, silice ou chlorure de magnésium.

On ajoute au chlorure de métal de transition un trialkylaluminium ou un hydrure de dialkylaluminium, tel que ceux définis ci-dessus pour le catalyseur de dimérisation.

Le tétraalkoxytitane, l'éther, et le composé de l'aluminium du catalyseur de dimérisation sont avantageusement mis en oeuvre dans des rapports molaires d'environ 1 : 0,5 : 1 à environ 1 : 20 : 20 et de préférence d'environ 1 : 1 : 2 à environ 1 : 20 : 20 et d'une manière la plus préférée d'environ 1 : 1 : 2 à environ 1 : 10 : 5.

Les halogénures de métal de transition et le composé de l'aluminium du catalyseur de polymérisation sont mis en oeuvre avantageusement dans un rapport molaire métal de transition/Al compris entre 1 : 0,5 et 1 : 10.

Quant au rapport molaire entre le tétraalkoxytitane et les halogénures de métal de transition, il dépend du taux de butène-1 qu'on désire introduire dans le copolymère, pour l'obtention d'un copolymère ayant les propriétés recherchées, il sera avantageusement choisi entre 1 : 10 et 10 : 1 et de préférence entre 1 : 3 et 3 : 1.

La température de réaction est avantageusement de 150 à 300° C, la pression totale étant choisie de préférence de 40 à 250 MPa.

Le procédé est avantageusement conduit en continu, les deux catalyseurs étant de préférence introduits séparément dans le réacteur; à la sortie du réacteur, l'effluent est détendu; l'éthylène et le butène-1 sont recomprimés et renvoyés au réacteur, le polymère est recueilli sans autre traitement.

En général les catalyseurs sont introduits dans l'enceinte réactionnelle sous forme de solution ou de dispersion fine dans un diluant convenable. Parmi les diluants convenables, on peut employer en général des coupes d'hydrocarbures, des hydrocarbures aliphatiques saturés ou insaturés, ou leurs mélanges, des hydrocarbures aromatiques saturés ou insaturés, ou leurs mélanges, des hydrocarbures aromatiques et des hydrocarbures halogénés. Dans une forme préférée de l'invention on introduit séparément, dans l'enceinte réactionnelle, le catalyseur de polymérisation et le catalyseur de dimérisation, ou ses constituants.

Il est en particulier nécessaire de respecter les diverses proportions des constituants des catalyseurs, mais dans certains cas la proportion de composé d'aluminium introduite avec le catalyseur de polymérisation peut être suffisante pour que le catalyseur de dimérisation se forme in-situ par addition d'un mélange de titanate d'alkyle et d'éther, dans les proportions indiquées ci-dessus (1 : 0,5 à 1 : 20 et de préférence 1 : 1 à 1 : 20 et d'une manière la plus préférée 1 : 1 à 1 : 10).

Les exemples suivants illustrent l'invention sans en limiter la portée.

### Exemple 1

Dans un réacteur de 1 litre environ, muni d'un système d'agitation et maintenu à 240° C, par un dispositif de régulation de température, on introduit en continu 587 millilitres (ml) par heure de méthylcyclohexane contenant en suspension 0,88 millimole d'un mélange de trichlorure de titane et de trichlorure de vanadium dans un rapport molaire $TiCl_3/VCl_3$ de 0,5 et 2,64 millimoles de triéthylaluminium, et 442 ml par heure de méthylcyclohexane contenant en solution 0,62 millimole de tétrabutylate de titane, 1,24 millimole de dioxane-1,4 et 1,86 millimole de triéthylaluminium.

On maintient une pression de 112 MPa par recyclage du gaz sortant du réacteur, dans lequel est maintenu une concentration d'hydrogène de 1 % en volume, et par apport d'éthylène frais.

En régime stationnaire on constate que le gaz de recyclage contient en poids 29 % de butène-1.

Le polymère produit contient 1,7 % en moles de butène-1. La productivité par rapport au trichlorure de titane est de 9 kg de polymère par milligramme-atome de titane.

Le polymère présente les caractéristiques suivantes :

| densité | = 0,940 g/cm³ |
|---|---|
| indice de fluidité | = 25 dg/min. |

## Exemple 2

Dans le même réacteur que dans l'exemple 1, et dans les mêmes conditions, on introduit en continu 587 ml par heure de méthyl-cyclohexane contenant 0,88 millimole de TiCl₃ et 2,64 millimoles de triéthylaluminium, et 442 ml par heure de méthylcyclohexane contenant en solution 0,62 millimole de tétrabutylate de titane, 1,24 millimole de tétrahydrofuranne et 1,86 millimole de triéthylaluminium.

La productivité par rapport au trichlorure de titane est de 9,2 kg de polymère par milligramme-atome de titane.

Le polymère a des caractéristiques voisines de celles du polymère obtenu dans l'exemple 1.

## Exemple 3

Dans le même réacteur que dans l'exemple 1 et dans les mêmes conditions, à ceci près que l'on remplace la triéthylaluminium par la même quantité de triisobutylaluminium, on a obtenu un polymère ayant des caractéristiques similaires à celles du polymère obtenu dans l'exemple 1.

La productivité par rapport au trichlorure de titane est similaire à celle obtenue dans l'exemple 1.

## Exemple 4

On a répété l'essai effectué selon l'exemple 1 un remplaçant la dioxane-1,4 par la même quantité de dihydropyranne.

La productivité obtenue est voisine de celle obtenue dans l'exemple 1 et le polymère a des caratéristiques similaires à celles du polymère obtenu dans l'exemple 1.

## Revendications

1. Procédé de préparation d'un copolymère éthylène/butène-1 à partir d'éthylène en présence du mélange d'un catalyseur de dimérisation et d'un catalyseur de polymérisation, caractérisé en ce que ledit mélange comprend au moins un titanate d'alkyle, au moins un halogénure d'un métal de transition choisi dans le groupe formé par le trichlorure de titane et le trichlorure de vanadium, au moins un éther et au moins un composé d'aluminium choisi dans le groupe formé par les hydrocarbylaluminiums et les hydrures de dialkylaluminium.

2. Procédé selon la revendication 1 dans lequel l'halogénure d'un métal de transition est un mélange de trichlorure de titane et de trichlorure de vanadium.

3. Procédé selon la revendication 1 ou 2 dans lequel on introduit séparément d'une part un mélange de titanate d'alkyle, d'éther et de composé d'aluminium, et d'autre part un mélange d'halogénure de métal de transition et de composé d'aluminium.

4. Procédé selon l'une des revendications 1 à 3 dans lequel le mélange contient un hydrocarbylaluminium et le titanate d'alkyle, l'éther et l'hydrocarbylaluminium sont dans un rapport molaire d'environ 1 : 0,5 : 1 à environ 1 : 20 : 20.

5. Procédé selon l'une des revendications 1 à 4 dans lequel l'halogénure d'un métal de transition et le composé de l'aluminium sont dans un rapport molaire de 1 : 0,5 à 1 : 10.

6. Procédé selon l'une des revendications 1 à 5 dans lequel le rapport molaire entre le titanate d'alkyle et l'halogénure de métal de transition est de 1 : 10 à 10 : 1.

7. Procédé selon l'une des revendications 1 à 6 dans lequel l'éther est un éther cyclique et le composé d'aluminium est un trialkylaluminium.

8. Procédé selon l'une des revendications 1 à 7 dans lequel le titanate d'alkyle est le tétrabutylate de titane, l'éther est le dioxane-1,4, et le composé d'aluminium est le triéthylaluminium.

9. Procédé selon l'une des revendications 1 à 8 dans lequel la réaction est effectuée à une température de 150 à 300° C et sous une pression de 40 à 250 MPa.

## Patentansprüche

1. Verfahren zur Herstellung eines Äthylen-1-Buten-Copolymeren, ausgehend von Äthylen in Anwesenheit eines Gemisches von einem Dimerisierungskatalysator und einem Polymerisierungskatalysator,
dadurch gekennzeichnet,
daß die genannte Mischung wenigstens ein Alkytitanat, wenigstens ein Halogenid eines Übergangsmetalles, gewählt aus der Gruppe gebildet durch das Titantrichlorid und das Vanadiumtrichlorid, wenigstens einen Ether und wenigstens eine Aluminiumverbindung, gewählt in der Gruppe gebildet durch die Aluminiumhydrocarbyle und die Hydride von Dialkylaluminium, umfaßt.

2. Verfahren gemäß Anspruch 1, in welchem das Halogenid eines Übergangsmetalls ein Gemisch ist von Titantrichlorid und von Vanadiumtrichlorid. ·

3. Verfahren gemäß Ansprüchen 1 oder 2, in welchem man getrennt einführt einerseits ein Gemisch von Alkyltitanat, Ether und von

4

Aluminiumverbindung, und andererseits ein Gemisch von Übergangsmetallhalogenid und von Aluminiumverbindung.

4. Verfahren gemäß einem der Ansprüche 1 bis 3, in welchem das Gemisch ein Hydrocarbylaluminium enthält, und wobei das Alkyltitanat, der Ether und das Hydrocarbylaluminium in einem molaren Verhältnis von ungefähr 1 : 0,5 : 1 bis ungefähr 1 : 20 : 20 sind.

5. Verfahren gemäß einem der Ansprüche 1 bis 4, in welchem das Halogenid eines Übergangsmetalls und die Aluminiumverbindung in einem molaren Verhältnis von 1 : 0,5 bis 1 : 10 sind.

6. Verfahren gemäß einem der Ansprüche 1 bis 5, in welchem das molare Verhältnis zwischen dem Alkytitanat und dem Halogenid des Übergangsmetalles von 1 : 10 bis 10 : 1 ist.

7. Verfahren gemäß einem der Ansprüche 1 bis 6, in welchem der Ether ein zyklischer Ether ist, und die Aluminiumverbindung ein Trialkylaluminium ist.

8. Verfahren gemäß einem der Ansprüche 1 bis 7, in welchem das Alkyltitanat, das Tetrabutilat von Titan ist, der Ether 1,4-Dioxan ist, und die Aluminiumverbindung das Triäthylaluminium ist.

9. Verfahren gemäß einem der Ansprüche 1 bis 8, in welchem die Reaktion durchgeführt wird bei einer Temperatur von 150 bis 300° C und unter einem Druck von 40 bis 250 MPa.

## Claims

1. A process for producing an ethylene/1-butene copolymer from ethylene in contact with a mixture of a dimerization catalyst and a polymerization catalyst, the said mixture comprising at least one alkyl titanate, at least one transition metal halogenide selected from the group consisting of titanium trichloride and vanadium trichloride, at least one ether and at least one aluminum compound selected from the group consisting of the hydrocarbylaluminums and the dialkyluminum hydrides.

2. A process according to claim 1, wherein the transition metal halogenide is selected from the group consisting of titanium trichloride and vanadium trichloride.

3. A process according to claim 1 wherein a mixture of alkyl titanate, ether and aluminum compound is first contacted with ethylene and a mixture of transition metal halogenide and aluminum compound is added thereafter.

4. A process according to claim 1, wherein the mixture comprises an hydrocarbylaluminum, and the alkyl titanate, the ether and the hydrocarbylaluminum are in a molar ratio of from about 1 : 0.5 : 1 to about 1 : 20 : 20.

5. A process according to claim 1, wherein the transition metal halogenide and the aluminum compound are in a molar ratio of 1 : 0.5 to 1 : 10.

6. A process according to claim 1, wherein the alkyl titanate to transition metal halogenide molar ratio is from 1 : 10 to 10 : 1.

7. A process according to claim 1, wherein the ether is a cyclic ether and the aluminum compound is a trialkylaluminum.

8. A process according to claim 1, wherein the alkyl titanate is titanium tetrabutylate, the ether is 1,4-dioxane and the aluminum compound is triethylaluminum.

9. A process according to claim 1, wherein the reaction is carried out at a temperature of from 150 to 300°C under a pressure from 40 to 250 MPa.